# DEMANDE DE BREVET EUROPEEN

(11) **EP 0 658 506 A1**
(43) Date de publication de la demande: **21.06.1995**
(21) Numéro de dépôt: 93810888.3
(22) Date de dépôt: 16.12.1993
(51) Int. Cl.: B65H 23/24, B65H 23/32

(54) **Dispositif de renvoi à coussin d'air et dispositif d'accumulation d'une bande en matériau souple muni d'un tel dispositif de renvoi**

(71) Demandeur: FABRIQUES DE TABAC REUNIES S.A., CH-2003 Neuchâtel-Serrières (CH)
(72) Inventeur: Cestonaro, Jean, CH-2074 Marin (CH)
(74) Mandataire: Fischer, Franz Josef

(57) **Abrégé**

Le dispositif de renvoi à coussin d'air (2) ne comporte aucune pièce mobile susceptible d'offrir une résistance de roulement, causant des vibrations ou nécessitant un entretien régulier. Le dispositif de renvoi est principalement constitué d'un élément de renvoi creux (20), alimenté en air comprimé (10), celui-ci s'échappant par une pluralité de trous radiaux (26) disposés sur une portion de surface de l'élément de renvoi afin de former un coussin d'air entre cette portion de surface et une bande souple (3) qui est renvoyée selon un certain angle par ledit dispositif.

Vu sa simplicité de fonctionnement, son faible coût et ses performances, un tel dispositif peut être avantageusement utilisé pour de nombreuses applications, mais il est particulièrement bien adapté pour équiper un accumulateur (11) d'une bande de papier en liaison avec une machine de raccordement de deux bandes de papier nécessitant l'arrêt de la bande pour le raccordement.

## Description

La présente invention concerne tout d'abord un dispositif de renvoi d'une bande en un matériau souple, par exemple une bande de papier, ainsi qu'un dispositif d'accumulation d'une telle bande muni d'un tel dispositif de renvoi, pouvant être employé notamment en liaison avec un dispositif de raccordement bout à bout de bandes de papier dans l'industrie de la cigarette.

Le brevet EP-A-0.318.427 décrit abondamment un procédé et un dispositif permettant de réaliser l'opération de raccordement de bandes de papier dans l'industrie de la cigarette. De par son principe, le dispositif précité travaille au raccordement lorsque les deux bandes de papier sont immobiles, ce qui nécessite soit d'arrêter la machine de production durant cette opération, soit de prévoir un dispositif d'accumulation permettant de réaliser une réserve de longueur de bande de papier, réserve qui est consommée par la machine de fabrication de cigarettes durant l'arrêt de la bande pour raccordement. Ceci est généralement un inconvénient important de ce dispositif ainsi que de tous ceux qui fonctionnent à l'arrêt puisque, en tenant compte des temps de décélération, d'arrêt et d'accélération, et si l'on veut que la production puisse toujours continuer à la même cadence, il est nécessaire de prévoir une réserve de longueur très importante. Généralement cette réserve de longueur est obtenue dans un dispositif d'accumulation, comme représenté par exemple dans la demande EP-A-0.395.029, est généralement composé de deux rangées alignées de poulies, généralement environ vingt par rangée, les deux rangées étant disposées en face l'une de l'autre, le ruban passant alternativement derrière une poulie d'une rangée puis derrière une poulie de l'autre rangée, la réserve de longueur étant obtenue en écartant les deux rangées de poulies, cette même réserve étant consommée en rapprochant les deux rangées de poulies. Les inconvénients d'un tel dispositif d'accumulation proviennent des vibrations introduites par des éléments en rotation, de l'inertie de chaque poulie lors des variations de vitesse ainsi que de la résistance au roulement offerte par chaque poulie; même ci celles-ci sont de construction soignée, chacune exerce une certaine force de résistance sur le ruban de papier, cette force allant en augmentant avec le temps à cause de l'usure des paliers ainsi que de leur encrassement dû aux poussières. La force de résistance exercée sur le ruban de papier à la sortie du dispositif valant la somme des forces de résistance offertes par chaque poulie arrive à être excessive, amenant à la déchirure du ruban de papier. Généralement on opte pour un compromis, en créant une réserve de longueur moins importante et en acceptant de baisser la cadence de production de la machine de fabrication de cigarettes. On a alors une baisse de productivité qui peut ne pas être négligeable. Une autre manière de palier à l'inconvénient mentionné consiste à augmenter considérablement l'écart possible entre les deux rangées de poulies, augmentant de ce fait la longueur de parcours de la bande entre deux poulies; cette manière de faire conduit à un encombrement excessif de la machine ainsi qu'à une instabilité de conduite du ruban de papier. Un autre inconvénient de ces dispositifs provient de l'entretien coûteux nécessité par ces nombreuses poulies.

A part les dispositifs de renvoi à poulie décrits ci-dessus, on connaît aussi ceux constitués uniquement d'un barreau fixe, généralement de section circulaire, sur une portion de la surface extérieure duquel passe une bande souple. Si ces dispositifs sont nettement plus simples que ceux à poulie, ils ont l'inconvénient de s'user très rapidement ainsi que d'user la bande lors de chaque renvoi. De plus, vu le frottement important de la bande sur le barreau, ils ne peuvent être utilisés pour une bande fragile comme une bande de papier mince.

Un premier but de l'invention est donc de proposer un dispositif de renvoi d'une bande souple, utilisable notamment pour une bande de papier mince, offrant une résistance de frottement extrêmement faible et ne nécessitant qu'un entretien minime.

Un autre but de l'invention est de proposer un dispositif d'accumulation d'une bande de papier qui, étant muni des renvois précédents, ne rencontre pas les inconvénients mentionnés des dispositifs connus.

Afin d'atteindre ces buts, l'invention propose un dispositif de renvoi conforme à la revendication 1, des formes d'exécution particulières étant décrites dans les revendications dépendantes, ainsi qu'un dispositif d'accumulation conforme à la revendication 15.

Les dispositifs selon l'invention sont plus particulièrement compréhensibles en regard de la description qui suit et du dessin d'accompagnement comportant les figures où:
la figure 1 montre une vue en perspective d'une forme d'exécution d'un dispositif de renvoi selon l'invention,
la figure 2A montre une coupe longitudinale du dispositif de la figure précédente,
la figure 2B montre une coupe longitudinale d'une autre forme d'exécution d'une partie d'un dispositif de renvoi selon l'invention,
la figure 2C montre une coupe transversale des dispositifs des figures précédentes,
la figure 3 montre une coupe longitudinale d'une autre forme d'exécution d'un dispositif de renvoi selon l'invention,
la figure 4 montre une portion d'un dispositif accumulateur selon l'invention, équipé de dispositifs de renvoi selon l'invention, et
la figure 5 montre une autre application d'un dispositif de renvoi selon l'invention.

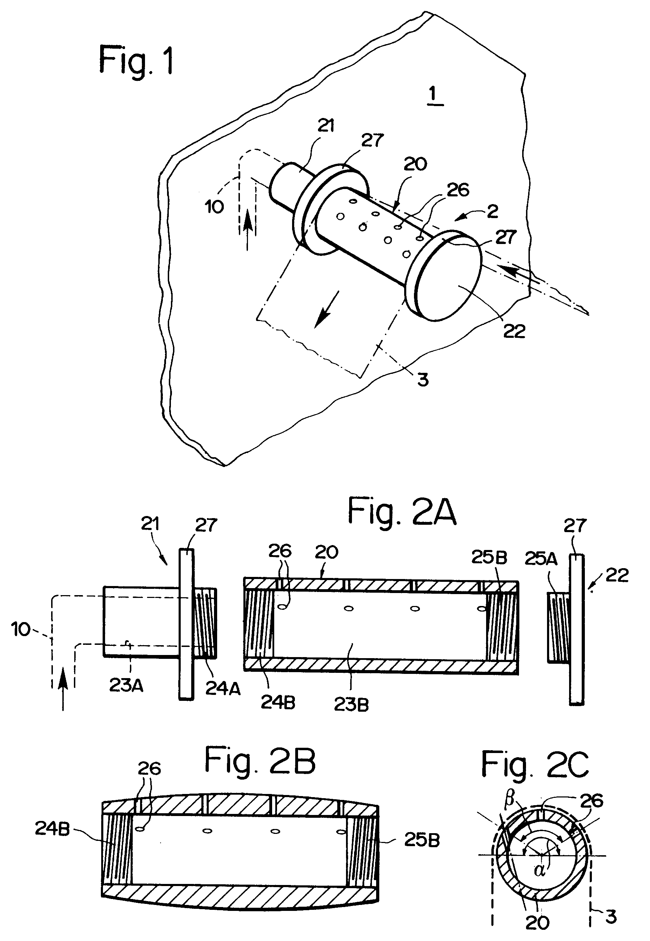

A la figure 1 on a une portion de machine 1 sur laquelle est montée une première forme d'exécution d'un dispositif de renvoi 2 selon l'invention, sur une portion de surface duquel passe avec une certaine vitesse une bande en matériau souple 3, par exemple en papier, qui est renvoyée selon un certain angle. La bande souple 3 est représentée ici comme si elle était transparente afin de pouvoir distinguer la constitution du dispositif de renvoi 2. Celui-ci est composé principalement d'un élément de renvoi tubulaire 20, dont l'extrémité proche de la machine 1 est reliée à celle-ci au moyen d'une pièce de liaison et de fixation 21. Une pièce d'extrémité 22 est fixée à l'autre extrémité de l'élément de renvoi tubulaire 20.

Comme on le voit mieux à la figure 2A, l'élément de renvoi 20 ainsi que la pièce de liaison 21 sont creux; la pièce de liaison est fixée, selon une quelconque manière connue, à la portion de machine, une alimentation à air comprimé, schématisée en 10, étant reliée à la partie creuse 23A de cette pièce de liaison. Un filetage 24A correspond à un taraudage 24B aménagé dans la partie creuse 23B de l'élément de renvoi 20, de manière à fixer celui-ci sur la pièce de liaison. Un autre taraudage 25B est aménagé à l'autre extrémité de l'élément de renvoi 20, pour y fixer la pièce d'extrémité 22 faisant office de bouchon, au moyen du filetage 25A. Une pluralité de trous 26 sont aménagés de préférence sur des génératrices de l'élément de renvoi 20, ces génératrices étant disposées au dessous de la surface de la bande 3 appuyant sur une portion de surface de l'élément de renvoi 20. Ainsi, lorsque le dispositif 2 est alimenté en air sous pression, celui-ci s'échappe par les trous 26 entre la bande 3 et la portion de surface de l'élément de renvoi 20 sur laquelle elle s'appuie, formant ainsi un coussin d'air qui élimine quasi totalement la force de frottement de la bande sur le dispositif de renvoi. Il n'est pas absolument nécessaire que les trous 26 soient alignés sur des génératrices de l'élément de renvoi 20 comme indiqué ci-dessus, ces trous peuvent aussi être décalés d'une génératrice à la suivante ou disposés de toute autre manière idoine sur la portion de surface de l'élément de renvoi 20 sur laquelle la bande 3 s'appuie, afin de former le coussin d'air requis. Selon une autre forme d'exécution de l'élément de renvoi 20, représentée à la figure 2B, sa surface extérieure n'est plus constituée de génératrices rectilignes, mais de génératrices en forme d'arc de cercle ou de parabole afin de mieux guider la bande 3. La figure 2C montre une coupe transversale de l'élément de renvoi 20, selon l'une ou l'autre des formes d'exécution précédente, les trous 26 étant alignés sur trois génératrices. On voit en particulier que pour un angle de renvoi de la bande α, ici de 180°, l'angle β entre les deux génératrices extrêmes est nettement inférieur à l'angle α ; cette relation est toujours vraie quel que soit l'angle α. Cette figure représente aussi une variante de la manière de percer les trous 26, le trou 26 disposé à gauche n'étant pas percé radialement mais selon un certain angle, de manière à être incliné en direction de l'intérieur de la surface d'appui de la bande 3 sur l'élément de renvoi 20. Cette manière de faire permet de mieux concentrer le coussin d'air sous la bande 3, limitant ainsi la consommation d'air. Les trous 26 seront généralement disposés de manière symétrique par rapport à la surface d'appui de la bande 3 sur l'élément de renvoi 20, mais on peut aussi les disposer de manière asymétrique, de manière à compenser un effet d'entraînement du coussin d'air par la bande, particulièrement dans les applications où celle-ci circule à haute vitesse. La pression d'alimentation en air, de même que la consommation d'air seront déterminés en fonction du nombre de trous 26 et de leur diamètre, de manière à permettre la constitution d'un coussin d'air suffisant dont l'efficacité dépend des caractéristiques physiques de la bande, notamment de sa porosité et de sa rugosité, de sa largeur ainsi que de sa vitesse de passage. L'efficacité optimum du coussin d'air est obtenue lorsqu'on a une consommation d'air minimum pour une force de frottement minimum ou nulle.

De préférence le dispositif de renvoi 2 est constitué des trois pièces 20, 21 et 22, de manière à pouvoir facilement être démonté et nettoyé ou de facilement pouvoir changer l'une des pièces, les moyens de fixation d'une pièce sur l'autre pouvant être différents de ceux décrits ici. Il est aussi possible que le dispositif 2 soit constitué en un seul élément ou en deux. La pièce de fixation et de liaison 21 comprend de préférence des moyens connus permettant de régler l'orientation du dispositif 2, de manière à ce que les trous 26 soient équitablement répartis sous la surface de la bande 3. Le dispositif 2 a été représenté comportant deux joues de guidage 27 afin de guider latéralement la bande 3, ces joues n'étant pas absolument indispensables, en particulier si l'élément de renvoi 20 a la forme représentée à la figure 2B.

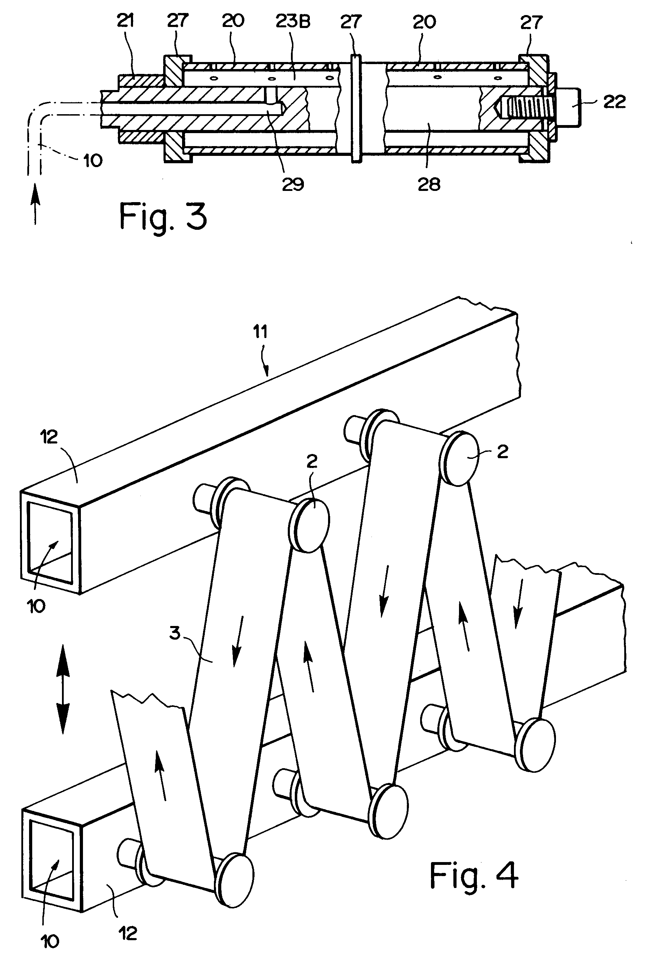

Un autre avantage de la simplicité d'exécution du dispositif de renvoi est visible sur la forme d'exécution représentée à la figure 3. Vu l'absence de vibrations du dispositif en fonctionnement, il devient possible de disposer deux, voire davantage, dispositifs de renvoi sur un même axe, ce qui est très difficile avec des dispositifs de renvoi à poulie. Le dispositif de la figure 3 montre deux éléments de renvoi 20 montés côte à côte, séparés par une joue de guidage 27, chacun comportant en outre une autre joue de guidage 27 sur son autre extrémité. La figure montre aussi une variante des moyens d'alimentation en air, pouvant évidemment aussi être montée avec les formes d'exécution décrites précédemment, où un élément central 28 comporte une canalisation interne 29 reliée d'une part à l'alimentation en air 10 et débouchant d'autre part dans la partie creuse 23B des éléments de renvoi 20.

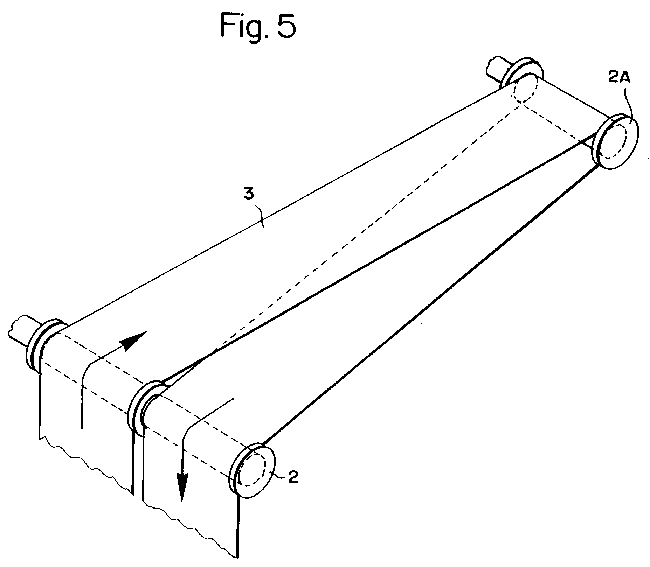

Comme représenté à la figure 5, il est possible d'avoir sur deux éléments de renvoi disposés sur un même axe comme ci-dessus, une bande passant dans un sens sur un des éléments de renvoi et dans l'autre sens sur l'autre élément. Un tel arrangement peut être particulièrement utile lorsqu'il est nécessaire de décaler le chemin de passage du ruban. Le dispositif de renvoi 2A sur le figure sera de préférence monté de manière à pouvoir s'éloigner ou se rapprocher de manière élastique du dispositif de renvoi double 2, de manière à conserver la bande tendue.

Encore un autre avantage du dispositif selon l'invention, provenant de sa construction modulaire, est qu'il est très facile de l'adapter d'une largeur de bande à une autre, simplement en changeant l'élément de renvoi 20 et éventuellement l'élément central 28.

De manière plus générale, on peut avoir plusieurs éléments de renvoi sur un même axe, chaque élément de renvoi guidant une bande, les largeurs des bandes, les sens et les vitesses de défilement pouvant être différents sur chaque élément de renvoi.

Ce dispositif de renvoi peut être utilisé pour de nombreuses applications où une bande souple en mouvement est renvoyée selon un certain angle; il remplace alors avantageusement soit un dispositif de renvoi constitué d'un barreau fixe autour duquel passe la bande, dispositif soumettant le barreau ainsi que la bande à une forte usure ainsi qu'offrant une forte résistance de frottement, soit alors une poulie de renvoi conventionnelle, comportant une ou des pièces en mouvement susceptibles de provoquer un accroissement de résistance de frottement et nécessitant un entretien régulier. Même pour les cas où le frottement n'est pas une valeur critique, on peut utiliser un tel dispositif de renvoi, vu sa simplicité.

Vu que la bande 3 ne frotte pas directement sur l'élément de renvoi 20 et ne cause donc aucune usure, on choisira néanmoins de préférence pour cet élément un matériau résistant à l'usure afin d'éviter celle qui pourrait être provoquée par le passages de poussières entraînées sur la surface de la bande tournée vers ledit élément. Le matériau choisi devra aussi permettre l'usinage des trous 26 ayant quelques dixièmes de mm. Un acier ou un matériau fritté ou une céramique ou même un matériau synthétique dur peuvent convenir à cet effet.

Comme représenté à la figure 4, un tel dispositif de renvoi est particulièrement utile pour un dispositif d'accumulation 11, notamment d'une bande de papier, connu généralement de la technique, composé de deux cadres 12, munis de dispositifs de renvoi autour desquels circule une bande 3, une réserve de bande étant faite en écartant les deux cadres 12, augmentant de ce fait la longueur de la bande 3 circulant dans le dispositif, cette réserve étant consommée en rapprochant les deux cadres 12. En équipant un tel dispositif d'accumulation 11 de dispositifs de renvoi 2 à coussin d'air, comme décrits plus haut, on limite fortement le frottement et il devient possible d'avoir un dispositif d'accumulation comportant un nombre suffisant de dispositifs de renvoi, sans qu'une force de frottement excessive soit appliquée sur la bande 3. De manière avantageuse, chaque cadre 12 sera creux de manière à constituer en même temps l'alimentation en air 11 de chaque dispositif de renvoi 2. Par rapport aux dispositifs d'accumulation de l'art antérieur, celui selon l'invention possède encore d'autres avantages, un moindre coût, un moindre entretien, une force de résistance au frottement du papier constante dans le temps, et une meilleur conduite du ruban de papier vu l'élimination des éléments tournants.

## Revendications

1. Dispositif de renvoi (2) d'une bande en un matériau souple (3) circulant selon une certaine vitesse longitudinale, comprenant en particulier un élément de renvoi (20) ayant une surface extérieure cylindrique, autour d'une portion de laquelle passe la bande,
caractérisé en ce que
l'élément de renvoi (20) comporte une partie creuse (23B) qui communique avec une alimentation en air comprimé (10), et une pluralité de trous (26) percés sous ladite portion de surface afin de la mettre en communication avec ladite partie creuse (23B), afin de former un coussin d'air entre la bande (3) et ladite portion de surface.

2. Dispositif selon la revendication 1, caractérisé en ce que au moins une partie des trous (26) sont percés radialement dans ledit élément de renvoi.

3. Dispositif selon la revendication 2, caractérisé en ce que au moins une partie des trous (26) sont percés dans ledit élément de renvoi selon une angle incliné en direction du centre du coussin d'air.

4. Dispositif selon l'une des revendications précédentes, caractérisé en ce que les trous (26) sont alignés sur des génératrices de ladite portion de surface.

5. Dispositif selon l'une des revendications précédentes, caractérisé en ce que les trous (26) disposés sur les deux génératrices extrêmes forment un angle au centre (β) inférieur à l'angle de renvoi (α) de la bande.

6. Dispositif selon l'une des revendications précédentes, caractérisé en ce que les génératrices de l'élément de renvoi (20) cylindrique sont rectilignes.

7. Dispositif selon l'une des revendications 1 à 5, caractérisé en ce que les génératrices de l'élément de renvoi (20) cylindrique sont arquées.

8. Dispositif selon l'une des revendications précédentes, caractérisé en ce qu'il comprend en outre une pièce de liaison/fixation (21) fixant l'élément de renvoi (20) à un bâti de machine(1;12) et transmettant l'alimentation en air comprimé, ainsi que d'une pièce d'extrémité (22) bouchant la partie creuse dudit élément de renvoi.

9. Dispositif selon la revendication 8, caractérisé en ce qu'il comprend des moyens de réglage (21) de la position angulaire de l'élément de renvoi (20).

10. Dispositif selon l'une des revendications précédentes, caractérisé en ce qu'il comprend des moyens de guidage latéral (27) de la bande de matériau souple.

11. Dispositif selon l'une des revendications précédentes, caractérisé en ce qu'il comprend au moins deux éléments de renvoi (20) disposés côte-à-côte sur un même axe.

12. Dispositif selon la revendication 11, caractérisé en ce que les longueurs d'au moins deux des différents éléments de renvoi (20) disposés côte-à-côte sont différentes, permettant le passage de bandes (3) de largeurs différentes.

13. Utilisation d'un dispositif selon l'une des revendications 11 ou 12 pour le renvoi d'une ou plusieurs bandes (3) circulant selon des sens et/ou des vitesses différents.

14. Utilisation d'un dispositif selon l'une des revendications 1 à 12 pour le renvoi d'une bande de papier.

15. Dispositif d'accumulation d'une bande de papier, caractérisé en ce qu'il est équipé d'une pluralité de dispositifs de renvoi selon l'une des revendications 1 à 12.
